# EUROPEAN PATENT SPECIFICATION

(11) **EP 3 676 328 B1**
(45) Date of publication and mention of the grant of the patent: **05.10.2022**
(21) Application number: 18755205.4
(22) Date of filing: 22.08.2018
(51) Int. Cl.: C08L 33/12, C08L 35/06, G02B 1/04

(54) **LIGHTING SYSTEM COMPONENT COMPRISING A HEAT-RESISTANT POLYMER**
BELEUCHTUNGSSYSTEMKOMPONENTE MIT WÄRMEBESTÄNDIGEM POLYMER
COMPOSANT DE SYSTÈME D'ÉCLAIRAGE COMPRENANT UN POLYMÈRE RÉSISTANT À LA CHALEUR

(30) Priority: 29.08.2017 EP 17188352
(43) Date of publication of application: 08.07.2020
(73) Proprietor: SABIC Global Technologies B.V., 4612 PX Bergen op Zoom (NL)
(72) Inventor: BRUSS, Erhard, 6160 GA Geleen (NL); MUTHUKRISHNAN, Sharmila, 6160 GA Geleen (NL); MARNIX, The, 6160 GA Geleen (NL)
(74) Representative: Sabic Intellectual Property Group
(86) International application number: PCT/EP2018/072620
(87) International publication number: WO 2019/042832

(56) References cited:
- WO-A1-98/28365
- WO-A1-2007/049877
- WO-A1-2017/162393

## Description

The present invention relates to a lighting system comprising a heat-resistant polymer.

The development of lighting systems, in particular lighting systems for vehicles, has witnessed a tremendous development in recent years. As a result of the commercial introduction of new types of light sources, the systems in which such light sources are implemented have seen great changes in their configuration.

One particular development is the miniaturisation of the light sources. There is an ongoing development as a result of which the size of the light source that produces a given quantity of light continues to be reduced. A particular type of light source that has led to this development is the LED or light emitting diode lamp.

This miniaturisation has resulted in developments of the components that can form part of lighting systems to accommodate this miniaturisation. For example, the design freedom of the lighting systems has significantly increased, allowing designers of the lighting systems to prepare certain aesthetic designs. The lighting systems can now for example be made into certain shapes that reflect the branding styles of the vehicle manufacturers, with far reduced requirements from the side of the light production quality.

The reduction of the size of the light sources in combination with the maintained or even increased quantity of light produced however does result in certain requirements to the materials used in the lighting systems. One particular requirement is that the lighting system has to be able to withstand a higher intensity of heat produced by a lighting source in a smaller volume, resulting from the size reduction of the light sources. Further, given that the light intensity as produced by the new light sources such as the LED sources may differ from light sources of previous art over the whole of the spectrum, there are also material requirements emerging in order to be able to guide the produced light in the desired directions.

Particular applications in which LED lamps are applied in lighting systems are automotive lighting systems. LED lamps may for example be used for automotive interior lighting systems and exterior lighting systems. Automotive exterior lighting systems include for example headlights, daytime running lights, rear lights, brake lights, and indicator lights. Further, LED lamps may be applied in lighting systems in public spaces, such as road lighting, runway lighting. Other applications of LED lamps are for example in medical lighting, and electronic device display lighting. The application of lighting systems comprising LED lamps may provide a significant benefit in that energy consumption per quantity of light produced may be reduced greatly.

In particular in the case of automotive exterior lighting systems and road lighting systems, where the intensity of light that is generated is relatively high, there is a particular requirement to have access to systems that can withstand the generated heat during the full lifetime of the lighting system. Further, the components in such lighting systems also require to demonstrate desired optical properties to ensure the high quality illumination that may be provided by light sources such as LED lamps is used to its best extent.

These requirements affect the choice of materials that may be utilised for such lighting system applications. For example, PMMA according to the state of the art is not able to withstand such generated heat in a sufficiently durable manner, and polycarbonate does not provide a desired combination of optical properties. WO98283365A1 discloses polymer compositions with very good transparency and haze, comprising a copolymer of methyl methacrylate and 95-5 wt% of a copolymer of styrene and maleic anhydride. Said compositions have very good optical properties. It further discloses lighting equipment for cars, displays or street lamps that can be obtained with the compositions.

The present invention provides a lighting system component that does demonstrate the required optical properties with at the same time the desired heat resistance properties. This has been achieved in a lighting system component comprising a polymer composition comprising:
(a) a (meth)acrylic polymer; and
(b) 5.0-90.0 wt% of a copolymer prepared using styrene and maleic anhydride with regard to the total weight of (a) and (b), the total of (a) and (b) being 100 wt.%, wherein the polymer composition is prepared by melt mixing of a mixture comprising (a) and (b) in a melt extruder, wherein the melt extruder comprises: (i) an inlet for feeding the mixture; (ii) a barrel comprising one or more extruder screw(s) each comprising a tip; (iii) one or more opening(s) for removing the obtained polymer composition from the extruder; and (iv) a volume of space in the area between the tip(s) of the extruder screw(s) and the opening(s) for removing the obtained polymer composition wherein during the melt mixing the temperature of the polymer composition in the volume of space (iv) is ≥ 235°C and ≤ 255°C and wherein the component is one or more of a light guide, a lens or a cover.

Such lighting system component has improved resistance to the heat generated by high-intensity light sources, such as LED light sources, whilst demonstrating desired properties including optical properties such as transmission and haze, and whilst also having desired scratch resistance properties.

The lighting system component according to the present invention preferably comprises a polymer composition comprising:
(a) 40.0-90.0 wt% of a (meth)acrylic polymer; and
(b) 10.0-60.0 wt% of a copolymer prepared using styrene and maleic anhydride with regard to the total weight of (a) and (b), the total of (a) and (b) being 100 wt%.

More preferably, the lighting system component according to the present invention comprises a polymer composition comprising:
(a) 40.0-80.0 wt% of a (meth)acrylic polymer; and
(b) 20.0-60.0 wt% of a copolymer prepared using styrene and maleic anhydride with regard to the total weight of (a) and (b), the total of (a) and (b) being 100 wt%.

Even more preferably, the lighting system component according to the present invention comprises a polymer composition comprising:
(a) 60.0-80.0 wt% of a (meth)acrylic polymer; and
(b) 20.0-40.0 wt% of a copolymer prepared using styrene and maleic anhydride with regard to the total weight of (a) and (b), the total of (a) and (b) being 100 wt%.

Particularly, the polymer composition used in the lighting systems component according to the present invention may comprise 60.0-75.0 wt% of a (meth)acrylic polymer, or 65.0-75.0 wt%, with regard to the total weight of the polymer composition. The polymer composition may alternatively comprise 25.0-40.0 wt% of a copolymer prepared using styrene and maleic anhydride, or 25.0-35.0 wt%, with regard to the total weight of the polymer composition.

Such polymer composition has a desirable scratch resistance and a desirable heat resistance.

It is preferred that the polymer composition comprises
(a) 65.0-75.0 wt% of a (meth)acrylic polymer; and
(b) 25.0-35.0 wt% of a copolymer prepared using styrene and maleic anhydride with regard to the total weight of (a) and (b).

A suitable indicator for the scratch resistance may for example be the residual scratch depth as determined in accordance with ASTM D7187-10.

Suitable indicators for the heat resistance in the context of the present invention may for example be the heat deflection temperature, also referred to as HDT, as determined in accordance with ISO 75-2 (2013), method B, where a higher HDT may be an indicator for a higher heat resistance; the glass transition temperature, also referred to as T_{g}, as determined in accordance with ISO 11357-2 (2013), where a higher T_{g} may be an indicator for a higher heat resistance; and/or the Vicat B softening temperature was determined in accordance with ISO 306 (2013), where a higher Vicat B may be an indicator for a higher heat resistance.

The polymer composition used in the lighting system component according to the present invention is prepared by melt mixing of a mixture comprising (a) and (b) in a melt extruder, wherein the melt extruder comprises:
(i) an inlet for feeding the mixture;
(ii) a barrel comprising one or more extruder screw(s) each comprising a tip;
(iii) one or more opening(s) for removing the obtained polymer composition from the extruder; and
(iv) a volume of space in the area between the tip(s) of the extruder screw(s) and the opening(s) for removing the obtained polymer composition
wherein during the melt mixing the temperature of the polymer composition in the volume of space (iv) is ≥ 235°C and ≤ 255°C.

Suitable melt extruders for preparation of the polymer compositions are well known. It is preferred that the melt extruder comprises at least two extruder screws wherein the extruder screws are co-rotating or counter-rotating, and wherein the melt extruder is designed such to ensure the feed mixture to be transported from the feed inlet to the opening for removing the obtained polymer composition and to ensure the feed mixture to be subjected to sufficient heat to result in the polymer composition in the volume of space (iv) to have a temperature of ≥ 235°C and ≤ 255°C. It is preferred that the melt extruder comprises two extruder screws wherein the extruder screws are co-rotating. Heat may be supplied to the feed mixture in the melt extruder by in the form of shear induced by rotation of the extruder screws and/or by supply of external heat such as via a heating jacket positioned around the barrel of the melt extruder.

Preferably, the temperature of the polymer composition during the melt mixing in the volume of space (iv) is ≥ 240°C and ≤ 250°C.

A polymer composition suitable for use in the lighting system component according to the present invention may for example by prepared via a process comprising the following steps in this order:
- continuously feeding the mixture comprising (a) and (b) and optionally further ingredients to the inlet (i) of a melt extruder;
- subjecting the mixture to rotation of the screws such as to result in the transportation of the mixture towards the opening(s) (iii);
- continuously removing the obtained polymer composition from the opening(s) (iii); and
- cooling the obtained polymer composition to obtain a solid composition.

In addition to inlet (i), the melt extruder may optionally have further inlet(s) for feeding the mixture of ingredients to the melt extruder.

The obtained polymer composition may be removed from the extruder from the opening(s) (iii), wherein the opening(s) may be present in the form of circular openings or holes. The obtained polymer composition may leave the melt extruder in the form of strands, wherein the polymer composition upon leaving the extruder is in molten state. The molten strands leaving the extruder may be subjected to cooling to a temperature below the melting point of the polymer composition. For example, the molten strands may be cooled to below 100°C. this cooling may be achieved by subjecting the molten strands to water having a temperature of for example ≤ 50°C.

It is preferred that the process for preparation of the polymer composition is a continuous process.

The (meth)acrylic polymer (a) preferably is a polymer comprising ≥ 95.0 % by weight of polymer units according to formula I, with regard to the total weight of the (meth)acrylic polymer: 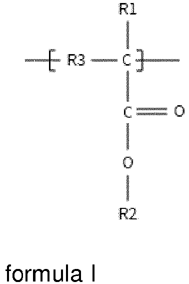 in which:
R1 is hydrogen or a hydrocarbon moiety comprising 1-4 carbon atoms;
R2 is a hydrocarbon moiety comprising 1-4 carbon atoms;
R3 is a hydrocarbon moiety comprising 1-4 carbon atoms;

The (meth)acrylic polymer (a) may for example be a polymer prepared using ≥ 95.0 % by weight, more preferably ≥ 98.0 % or ≥ 99.0 % by weight, with regards to the total weight of the monomers used, of one or more monomers selected from methyl acrylate, methyl-2-methyl acrylate, methyl-2-ethyl acrylate, methyl-2-propyl-acrylate, methyl-2-butyl acrylate, ethyl acrylate, ethyl-2-methyl acrylate, ethyl-2-ethyl acrylate, ethyl-2-propyl acrylate, ethyl-2-butyl acrylate, propyl acrylate, propyl-2-methyl acrylate, propyl-2-ethyl acrylate, propyl-2-propyl acrylate, propyl-2-butyl acrylate, butyl acrylate, butyl-2-methyl acrylate, butyl-2-ethyl acrylate, butyl-2-propyl acrylate, butyl-2-butyl acrylate, t-butyl-2-methyl acrylate, isobutyl-2-methyl acrylate, isopropyl-2-methyl acrylate, or combinations thereof. More preferably, the (meth)acrylic polymer (a) is a polymer prepared using ≥ 95.0 % by weight, more preferably ≥ 98.0 % or ≥ 99.0 % by weight, with regards to the total weight of the monomers used of one or more monomers selected from methyl acrylate, methyl-2-methyl acrylate, butyl-2-methyl acrylate, ethyl acrylate, or combinations thereof.

Preferably, the (meth)acrylic polymer (a) is selected from polymethylmethacrylate (PMMA), polybutylmethacrylate (PBMA), poly(methylmethacrylate-ethylacrylate (PMMA-co-EA), polyethyl acrylate (PEA), polybenzyl methacrylate, poly(n-butyl acrylate), poly(t-butyl acrylate), poly(cyclohexyl methacrylate), poly(1,3-dimethylbutyl methacrylate), poly(3,3-dimethylbutyl methacrylate), poly(diphenylethyl methacrylate), poly(diphenylmethyl methacrylate), poly(dodecyl methacrylate), poly(2-ethylbutyl methacrylate), polyethyl methacrylate, poly(trimethylpropyl methacrylate), poly(n-propylmethacrylate), polyphenyl methacrylate, poly(1-phenylethyl methacrylate), polyoctyl methacrylate, polyneopentyl methacrylate, poly(1-methylpentyl methacrylate), polymethylbutyl methacrylate, polylauryl methacrylate, polyisopropyl methacrylate, polyisopentyl methacrylate, or combinations thereof. More preferably, the (meth)acrylic polymer (a) is selected from polymethylmethacrylate (PMMA), polybutylmethacrylate (PBMA), poly(methylmethacrylate-ethylacrylate (PMMA-co-EA), or polyethyl acrylate (PEA). It is preferred that the (meth)acrylic polymer (a) is polymethylmethacrylate (PMMA).

The PMMA may for example have a melt mass flow rate as determined in accordance with ISO 1133-1 (2011), at 230°C using a load of 3.80 kg, of ≥ 0.1 and ≤ 20.0 g/10 min, alternatively ≥ 0.5 and ≤ 10.0 g/10 min, alternatively ≥ 1.0 and ≤ 5.0 g/10 min. The use of such PMMA in the preparation of a polymer composition according to the invention may for example result in a polymer composition having such flow properties allowing for the production of transparent articles of the polymer composition via injection moulding.

The copolymer prepared using styrene and maleic anhydride may also be referred to as a SMA copolymer (styrene-maleic anhydride copolymer).

The SMA copolymer may for example comprise ≥ 10 wt% and ≤ 50 wt% of polymer units derived from maleic anhydride, with regard to the total weight of the copolymer prepared using styrene and maleic anhydride, alternatively ≥ 15 wt% and ≤ 40 wt%, alternatively ≥ 20 wt% and ≤ 35 wt%, alternatively ≥ 20 wt% and ≤ 30 wt%. A SMA copolymer having such quantity of polymer units derived from maleic anhydride demonstrates a particularly desired transparency, which is particularly applicable to use in the lighting systems component of the present invention.

The SMA copolymer may for example have an intrinsic viscosity, also referred to as IV, of ≥ 0.20 and ≤ 1.00 dl/g, alternatively ≥ 0.30 and ≤ 0.75 dl/g, alternatively ≥ 0.40 and ≤ 0.60 dl/g, as determined in accordance with ISO 1628-1:2009.

The SMA copolymer may for example have a Vicat softening temperature of ≥ 100°C, alternatively ≥ 120°C, alternatively ≥ 140°C, such as ≥ 140°C and ≤ 180°C, as determined in accordance with ISO 306 (2013), method B120.

In a preferred embodiment, the polymer composition comprises a copolymer prepared using styrene and maleic anhydride comprising ≥ 20 wt% and ≤ 35 wt% of polymer units derived from maleic anhydride, with regard to the total weight of the copolymer prepared using styrene and maleic anhydride, and wherein the (meth)acrylic polymer (a) is polymethylmethacrylate (PMMA).

The polymer composition may optionally comprise further ingredients such as antioxidants. These antioxidants may for example be phenolic antioxidants and/or phosphite antioxidants. A stabiliser composition comprising one or more phenolic antioxidant(s) and one or more phosphite antioxidant(s) may for example be used. Phenolic antioxidants may for example be selected from monophenolic antioxidants, i.e. antioxidants containing one phenolic group per molecule, bisphenolic antioxidants i.e. antioxidants containing two phenolic groups per molecule, and polyphenolic antioxidants, i.e. antioxidants containing more than two phenolic groups per molecule, including 1,1,3-tris(2-methyl-4-hydroxy-5-t-butyl phenyl) butane, pentaerythritol tetrakis(3-(3,5-di-t-butyl-4-hydroxyphenyl)propionate, 1,3,5-trimethyl-2,4,6-tris(3,5-di-t-butyl-4-hydroxybenzyl)benzene, 1,3,5-tris(3,5-di-t-butyl-4-hydroxybenzyl)isocyanurate, and 1,3,5-tris(4-t-butyl-2,6-dimethyl-3-hydroxybenzyl)isocyanurate. Preferably, the phenolic antioxidant is pentaerythritol tetrakis(3-(3,5-di-t-butyl-4-hydroxyphenyl)propionate.

Phosphite antioxidants may for example be selected from trisnonylphenyl phosphite, trilauryl phosphite, tris(2,4-di-t-butylphenyl)phosphite, triisodecyl phosphite, diisodecyl phenyl phosphite, diphenyl isodecyl phosphite, and triphenyl phosphite. Preferably, the phosphite antioxidant is tris(2,4-di-t-butylphenyl)phosphite.

Preferably, the stabiliser that is introduced to the melt extruder comprises pentaerythritol tetrakis(3-(3,5-di-t-butyl-4-hydroxyphenyl)propionate.

The polymer composition may for example comprise ≥ 0.10 and ≤ 1.00 wt% of antioxidant, with regard to the total weight of the polymer composition, preferably ≥ 0.20 and ≤ 0.50 wt%.

The polymer composition may optionally comprise further ingredients such as heat stabilisers. The heat stabilisers may for example be a nitrogen-containing compounds. Such nitrogen-containing heat stabilisers may for example be one or more selected from the list consisting of aminotriazine compounds, allantoin, hydrazides, polyamids, melamines, and/or mixtures thereof.

The nitrogen-containing compound can be a low molecular weight compound or a high molecular weight compound. Examples of low molecular weight nitrogen-containing compounds can include an aliphatic amine (e.g., monoethanolamine, diethanolamine, and tris-(hydroxymethyl)aminomethane), an aromatic amine (e.g., an aromatic secondary or tertiary amine such as o-toluidine, p-toluidine, p-phenylenediamine, o-aminobenzoic acid, p-aminobenzoic acid, ethyl o-aminobenzoate, or ethyl p-aminobenzoate), an imide compound (e.g., phthalimide, trimellitimide, and pyromellitimide), a triazole compound (e.g., benzotriazole), a tetrazole compound (e.g., an amine salt of 5,5'-bitetrazole, or a metal salt thereof), an amide compound (e.g., a polycarboxylic acid amide such as malonamide or isophthaldiamide, and p-aminobenzamide), hydrazine or a derivative thereof (e.g., an aliphatic carboxylic acid hydrazide such as hydrazine, hydrazone, a carboxylic acid hydrazide (stearic hydrazide, 12-hydroxystearic hydrazide, adipic dihydrazide, sebacic dihydrazide, or dodecane diacid dihydrazide; and an aromatic carboxylic acid hydrazide such as benzoic hydrazide, naphthoic hydrazide, isophthalic dihydrazide, terephthalic dihydrazide, naphthalenedicarboxylic dihydrazide, or benzenetricarboxylic trihydrazide)), a polyaminotriazine (e.g., guanamine or a derivative thereof, such as guanamine, acetoguanamine, benzoguanamine, succinoguanamine, adipoguanamine, 1,3,6-tris(3,5-diamino-2,4,6-triazinyl)hexane, phthaloguanamine or CTU-guanamine, melamine or a derivative thereof (e.g., melamine, and a condensate of melamine, such as melam, melem or melon)), a salt of a polyaminotriazine compound containing melamine and a melamine derivative with an organic acid, a salt of a polyaminotriazine compound containing melamine and a melamine derivative with an inorganic acid, uracil or a derivative thereof (e.g., uracil, and uridine), cytosine or a derivative thereof (e.g., cytosine, and cytidine), guanidine or a derivative thereof (e.g., a non-cyclic guanidine such as guanidine or cyanoguanidine; and a cyclic guanidine such as creatinine), and urea or a derivative thereof.

The polymer composition may for example comprise ≥ 0.10 and ≤ 1.00 wt% of heat stabilisers, with regard to the total weight of the polymer composition, preferably ≥ 0.20 and ≤ 0.50 wt%.

The polymer composition may for example have a melt mass flow rate as determined in accordance with ISO 1133-1 (2011), at 230°C using a load of 3.80 kg, of ≥ 0.1 and ≤ 10.0 g/10 min, alternatively ≥ 0.5 and ≤ 5.0 g/10 min, alternatively ≥ 1.0 and ≤ 5.0 g/10 min, alternatively ≥ 1.5 and ≤ 2.5 g/10 min. The use of such copolymer composition allows for the production of the lighting system component with good processability.

In a certain preferred embodiment, the present invention relates to a lighting system component comprising a polymer composition comprising:
(a) 60.0-90.0 wt% of polymethylmethacrylate (PMMA); and
(b) 10.0-40.0 wt% of a copolymer prepared using styrene and maleic anhydride comprising ≥ 10 wt% and ≤ 50 wt% of polymer units derived from maleic anhydride;
with regard to the total weight of (a) and (b), the total of (a) and (b) being 100 wt%;
wherein the polymer composition is prepared by melt mixing of a mixture comprising (a) and (b) in a melt extruder, wherein the melt extruder comprises:
(i) an inlet for feeding the mixture;
(ii) a barrel comprising one or more extruder screw(s) each comprising a tip;
(iii) one or more opening(s) for removing the obtained polymer composition from the extruder; and
(iv) a volume of space in the area between the tip(s) of the extruder screw(s) and the opening(s) for removing the obtained polymer composition
wherein during the melt mixing the temperature of the polymer composition in the volume of space (iv) is ≥ 235°C and ≤ 255°C; and
wherein an article produced using the polymer composition has:
- a luminous transmittance as determined in accordance with ASTM D1003 (2000) of ≥ 90.0 %;
- a haze as determined in accordance with ASTM D1003 (2000) of ≤ 2.3 %;
- a glass transition temperature as determined in accordance with ISO 11357-2 (2013) of ≥ 125°C;
- a temperature of deflection under load as determined in accordance with ISO 75-2 (2013), method B of ≥ 105°C; and/or
- a Vicat B softening temperature as determined in accordance with ISO 306 (2013), using a force of 50 N and a heating rate of 120 K/h, of ≥ 110°C.

Such polymer composition has a desirable balance of high heat resistance, good scratch resistance and good optical properties.

The invention also relates in an embodiment to a lighting system component wherein the lighting system component has:
- a luminous transmittance as determined in accordance with ASTM D1003 (2000) of ≥ 90.0 %, preferably ≥ 91.0 %;
- a haze as determined in accordance with ASTM D1003 (2000) of ≤ 2.3 %, preferably ≤ 2.0 %;
- a glass transition temperature as determined in accordance with ISO 11357-2 (2013) of ≥ 125°C, preferably ≥ 130°C;
- a temperature of deflection under load as determined in accordance with ISO 75-2 (2013), method B of ≥ 105°C, preferably ≥ 110°C; and/or
- a Vicat B softening temperature as determined in accordance with ISO 306 (2013), using a force of 50 N and a heating rate of 120 K/h, of ≥ 110°C, preferably ≥115°C.

It is preferred that such lighting system component has a residual scratch depth as determined in accordance with ASTM 7187-10 of ≤ 1050 nm, more preferably ≤ 1000 nm.

The invention also relates in an embodiment to a lighting system component comprising a polymer composition comprising:
(a) 60.0-90.0 wt% of polymethylmethacrylate (PMMA); and
(b) 10.0-40.0 wt% of a copolymer prepared using styrene and maleic anhydride comprising ≥ 10 wt% and ≤ 50 wt% of polymer units derived from maleic anhydride;
wherein the lighting system component has:
- a luminous transmittance as determined in accordance with ASTM D1003 (2000) of ≥ 90.0 %, preferably ≥ 91.0 %;
- a haze as determined in accordance with ASTM D1003 (2000) of ≤ 2.3 %, preferably ≤ 2.0 %;
- a glass transition temperature as determined in accordance with ISO 11357-2 (2013) of ≥ 125°C, preferably ≥ 130°C;
- a temperature of deflection under load as determined in accordance with ISO 75-2 (2013), method B of ≥ 105°C, preferably ≥ 110°C; and/or
- a Vicat B softening temperature as determined in accordance with ISO 306 (2013), using a force of 50 N and a heating rate of 120 K/h, of ≥ 110°C, preferably ≥115°C.

In a particular embodiment the invention relates to a lighting system component wherein the (meth)acrylic polymer (a) is selected from polymethylmethacrylate (PMMA), polybutylmethacrylate (PBMA), poly(methylmethacrylate-ethylacrylate (PMMA-co-EA), or polyethyl acrylate (PEA).

Particularly, the invention also relates to a lighting system component wherein the copolymer prepared using styrene and maleic anhydride comprises ≥ 10 wt% and ≤ 50 wt% of polymer units derived from maleic anhydride, with regard to the total weight of the copolymer prepared using styrene and maleic anhydride.

For example, the copolymer used in the lighting system component prepared using styrene and maleic anhydride comprises ≥ 20 wt% and ≤ 35 wt% of polymer units derived from maleic anhydride, with regard to the total weight of the copolymer prepared using styrene and maleic anhydride, and wherein the (meth)acrylic polymer (a) is polymethylmethacrylate (PMMA).

The lighting system component of the present invention is one or more of a light guide, a lens or a cover. For example, the lighting system component may be a light guide. Alternatively, the lighting system component may be a lens. Particularly, the lens may be a Fresnel-type lens. Alternatively, the lighting system component may be a cover.

Such light guide preferably comprises an internal structure suitable for guiding light radiation from at least one aperture through which the radiation enters the light guide and a surface structure that is at least partly transmitting the light radiation. This surface structure preferably comprises the polymer composition.

It is particularly preferred that the polymer composition that is used in the lighting system component of the present invention has an Abbe number that is greater than 30. For example, the Abbe number may be in the range of 30-60, preferably 35-55, more preferably 40-50. The Abbe number is understood to be an indicator for the light dispersion, where a higher value indicates a lower dispersion. The light dispersion reflects the degree to which incoming light radiation of a certain wavelength is refracted through a transparent object, such as a lens. A low dispersion indicates a relatively equal refraction of light of different wavelengths, which is particularly desirable in many lighting system applications.

The invention also relates in certain of its embodiments to a lighting system comprising at least one lighting system component according to the present invention. Such lighting system may for example comprise at least one LED light source. In a certain embodiment, the component is a light guide positioned to guide the light generated by the LED light source from the light source to one or more position(s) where the light is to be emitted. It is preferred that the light guide is transmissive along its inner surface to the light generated by the LED light source.

The subject matter of the present invention also relates to an automotive lighting unit comprising such lighting system. Such automotive lighting unit may for example be a headlight unit, a brake light unit, a tail light unit, a fog light unit, or an indicator light unit.

The invention will now be illustrated by the following non-limiting examples.

**Table I - Materials used**

| | |
|---|---|
| PMMA | SABIC 20HR, a polymethylmethacrylate (meth)acrylic polymer, obtainable from SABIC |
| SMA | XIRAN SZ26120, a copolymer prepared using styrene and maleic anhydride, comprising 26 wt% of polymer units derived from maleic anhydride, obtainable from Polyscope, The Netherlands |
| PC | Lexan 143R, a polycarbonate obtainable from SABIC |

Polymer compositions were prepared using a Coperion ZSK25 co-rotating intermeshing twin-screw melt extruder using for each of the examples the composition of ingredients as presented in table II. The extruder was operated at a speed of 300 rpm. The material feed rate was 8 kg/h.

For examples 1-9, the extruder settings were such that the temperature of the polymer composition in the volume of space in the area between the tips of the extruder screws and the openings for removing the obtained polymer composition was 235°C.

For comparative example 10, the extruder settings were such that the temperature of the polymer composition in the volume of space in the area between the tips of the extruder screws and the openings for removing the obtained polymer composition was 230°C.

For comparative example 11, the extruder settings were such that the temperature of the polymer composition in the volume of space in the area between the tips of the extruder screws and the openings for removing the obtained polymer composition was 260°C.

The material leaving the extruder in molten circular strands having a diameter of ca. 4 mm was cooled to solidification by conducting the strands via a water bath in which the water in maintained at a temperature of 20-40°C, upon which the solidified strands were cut into pellets having a length of ca. 4 mm.

**Table II - compositions for extrusion**

| Example | PMMA | SMA | PC |
|---|---|---|---|
| 1 | 90.0 | 10.0 | |
| 2 | 80.0 | 20.0 | |
| 3 | 70.0 | 30.0 | |
| 4 | 60.0 | 40.0 | |
| 5 | 50.0 | 50.0 | |
| 6 | 40.0 | 60.0 | |
| 7 | 20.0 | 80.0 | |
| 8 | 100.0 | 0.0 | |
| 9 | 0.0 | 100.0 | |
| 10 | 70.0 | 30.0 | |
| 11 | 70.0 | 30.0 | |
| 12 | | | 100.0 |

The values in table II are in parts by weight.

The polymer compositions of examples 1-12 were subjected to material property testing to obtain the values for the properties as presented in table III below.

**Table III - Material properties of polymer compositions**

| | Example | | | | | | | | | | | |
|---|---|---|---|---|---|---|---|---|---|---|---|---|
| Property | 1 | 2 | 3 | 4 | 5 | 6 | 7 | 8 | 9 | 10 | 11 | 1 |
| T_{g} | 122 | 126 | 129 | 135 | 140 | 143 | 150 | 116 | 158 | 129 | 130 | 1 |
| HDT | 100 | 106 | 110 | 115 | 118 | 122 | 130 | 99 | 124 | 111 | 111 | 1 |
| Vicat B | | 113 | 118 | 123 | 128 | 131 | 105 | 142 | 149 | 117 | 117 | |
| MFI | 1.90 | 1.92 | 2.00 | 1.99 | | | | 1.86 | 2.24 | | | |
| Transmission | | 91.1 | 91.1 | 90.8 | 89.5 | 90.4 | 90.1 | 91.0 | 88.9 | 89.0 | 91.5 | |
| Haze | | 2.2 | 1.9 | 2.0 | 3.4 | 2.0 | 1.5 | 2.5 | 1.8 | 4.1 | 2.3 | |
| Abbe number | 53.0 | 48.3 | 46.2 | | | | | 56.8 | | | | 3 |
| Impact strength | | 2.15 | 2.24 | 2.08 | 2.15 | 2.24 | 2.08 | 2.10 | 1.94 | 2.30 | 2.30 | |
| Tensile strength | | 71.6 | 72.0 | 68.0 | 68.0 | 54.0 | 41.0 | 71.5 | 19.0 | 76.0 | 75.0 | |
| Residual depth | | 1370 | 1428 | 1480 | 1538 | 1556 | 1685 | 1304 | 1948 | 1581 | 1384 | |
| Hardness | | 0.28 | 0.29 | 0.28 | 0.28 | 0.28 | 0.29 | 0.26 | 0.29 | 0.28 | 0.28 | |
| Strand stability | | good | good | good | good | good | good | good | good | good | poor | |

Wherein:
- T_{g} is the glass transition temperature in °C as determined in accordance with ISO 11357-2 (2013).
- HDT is the heat deflection temperature in °C as determined as the temperature of deflection under load, in accordance with ISO 75-2 (2013), method B.
- Vicat B softening temperature in °C was determined in accordance with ISO 306 (2013), using a force of 50 N and a heating rate of 120 K/h.
- MFI is the melt mass flow rate in g/10 min as determined in accordance with ISO 1133-1 (2011), at 230°C using a load of 3.80 kg.
- The Abbe number (dimensionless) is determined in accordance with
- Transmission in % is the luminous transmittance as determined in accordance with ASTM D1003 (2000).
- Haze in % was determined in accordance with ASTM D1003 (2000).
- The Yellowness index (YI) was determined in accordance with ASTM E313 (2010).
- Impact strength in kJ/m² is the Izod impact strength as determined in accordance with ISO 180 (2000), notch type A, at 23°C.
- Tensile strength in MPa was determined in accordance with ISO 527-1 (2012).
- Residual depth in nm is the depth of scratches induced by the nano-scratching method as determined in accordance with ASTM 7187-10.
- Hardness in GPa is determined in as the indentation hardness in accordance with ISO 14577-1 (2015). Hardness was determined using a Berkovich indenter with a tip diameter of 20 nm. Indentations were made with a constant strain rate of 0.05 s⁻¹ and indentation depth of 2µm.
- Strand stability is an indicator for the possibility to guide strands of the molten material, the strands typically being circular and having a diameter of 3-5 mm, via a water bad where solidification takes place over one or more guiding rolls into a rotary cutter where the solid strands are cut into pellets. Where such guidance does not result in periodic breaking of strands, the strand stability is indicated to be good. Where breaking of strands occurs, the strand stability is indicated as poor.

During the experiment of comparative example 10, it was not possible to process the molten material leaving the melt extruder in strands and cooling the strands in the water bath. Breaking of stands occurred. This may be attributable to degradation of the polymer due to the high temperature conditions used in comparative example 10.

The presented examples indicate that a lighting system comprising a polymer composition according to the present invention, comprising 60.0-80.0 wt% of a (meth)acrylic polymer; and 20.0-40.0 wt% of a copolymer prepared using styrene and maleic anhydride, which is prepared by melt mixing in a melt extruder at a temperature of ≥ 235°C and ≤ 255°C, has a desirably good combination of heat resistance and scratch resistance, combined with amongst other good optical properties and impact strength.

A number of samples were subjected to a heat ageing test at 90°C for 1200 hours according to ASTM D5374 (2013), using type 1 ovens, with an air circulation of 5 to 20 changes per hour. Subsequently, haze, transmission and yellowness index were determined. The obtained values are presented in table IV below.

**Table IV - Heat ageing results**

| Example | 3 | | 8 | |
|---|---|---|---|---|
| | T0 | T1200 | T0 | T1200 |
| Transmission | 91.4 | 91.3 | 93.0 | 92.9 |
| Haze | 1.35 | 1.66 | 0.82 | 1.04 |
| YI | 0 | 0.37 | 0.84 | 1.00 |

The initial values are presented as T0. The values after 1200 hours of heat aging are presented as T1200. These results demonstrate that the optical properties are maintained at a desirable high level upon exposure to high temperatures for a long period.

Further, a number of samples were subjected to a weatherability study using the test protocol of ASTM G155, using a black panel temperature of 63°C, a chamber temperature of 42°C, a relative humidity of 50%, and an irradiance at 340nm of 0.35 W/m², with S.Boro inner and outer xenon lamp filters. The operated cycle was 102 min. light only and 18 min. light plus front water spray.

At intervals during the weatherability study, the colour difference was determined as ΔE in accordance with the CIELAB method. The ΔE values are presented in table V below.

**Table V - Results of colour retention upon weatherability**

| Exposure (hrs) | Example | |
|---|---|---|
| | 3 | 8 |
| 250 | 0.30 | 0.35 |
| 500 | 0.45 | 0.40 |
| 1000 | 0.60 | 0.55 |
| 1500 | 0.95 | 0.50 |

The results from the weatherability study indicate the polymer composition for use in the lighting system component according to the present invention does not show a notable colour change upon exposure to weathering conditions. Values for ΔE below 3 indicate that no colour difference is notable for the human observer. The measured values of below 1 are far removed from this threshold.

## Claims

1. Lighting system component comprising a polymer composition comprising:
(a) a (meth)acrylic polymer; and
(b) 5.0-90.0 wt% of a copolymer prepared using styrene and maleic anhydride with regard to the total weight of (a) and (b), the total of (a) and (b) being 100 wt%, wherein the polymer composition is prepared by melt mixing of a mixture comprising (a) and (b) in a melt extruder, wherein the melt extruder comprises:
(i) an inlet for feeding the mixture;
(ii) a barrel comprising one or more extruder screw(s) each comprising a tip;
(iii) one or more opening(s) for removing the obtained polymer composition from the extruder; and
(iv) a volume of space in the area between the tip(s) of the extruder screw(s) and the opening(s) for removing the obtained polymer composition
wherein during the melt mixing the temperature of the polymer composition in the volume of space (iv) is ≥ 235°C and ≤ 255°C;
wherein the component is one or more of a light guide, a lens or a cover.

2. Lighting system component according to claim 1 comprising a polymer composition comprising:
(a) 60.0-80.0 wt% of a (meth)acrylic polymer; and
(b) 20.0-40.0 wt% of a copolymer prepared using styrene and maleic anhydride with regard to the total weight of (a) and (b), the total of (a) and (b) being 100 wt%.

3. Lighting system component according to any one of claims 1-2 wherein the (meth)acrylic polymer (a) is selected from polymethylmethacrylate (PMMA), polybutylmethacrylate (PBMA), poly(methylmethacrylate-ethylacrylate (PMMA-co-EA), or polyethyl acrylate (PEA).

4. Lighting system component according to any one of claims 1-3 wherein the copolymer prepared using styrene and maleic anhydride comprises ≥ 10 wt% and ≤ 50 wt% of polymer units derived from maleic anhydride, with regard to the total weight of the copolymer prepared using styrene and maleic anhydride.

5. Lighting system component according to any one of claims 1-4, wherein the copolymer prepared using styrene and maleic anhydride comprises ≥ 20 wt% and ≤ 35 wt% of polymer units derived from maleic anhydride, with regard to the total weight of the copolymer prepared using styrene and maleic anhydride, and wherein the (meth)acrylic polymer (a) is polymethylmethacrylate (PMMA).

6. Lighting system component according to any one of claims 1-5 wherein the lens is a Fresnel-type lens.

7. Lighting system component according to any one of claims 1-5, wherein the lighting component is a light guide comprising an internal structure suitable for guiding light radiation from at least one aperture through which the radiation enters the light guide and a surface structure that is at least partly transmitting the light radiation.

8. Lighting system component according to claim 7, wherein the surface structure comprises the polymer composition.

9. Lighting system comprising at least one lighting system component according to claims 1-8.

10. Lighting system according to claim 9 further comprising at least one LED light source.

11. Lighting system according to any one of claims 9-10 wherein the component is a light guide positioned to guide the light generated by the LED light source from the light source to one or more position(s) where the light is to be emitted.

12. Lighting system according to any one of claims 9-11 wherein the light guide is transmissive along its inner surface to the light generated by the LED light source.

13. Automotive lighting unit comprising the lighting system according to any one of claims 9-12.

14. Automotive lighting unit according to claim 13, wherein the lighting unit is a headlight unit, a brake light unit, a tail light unit, a fog light unit, or an indicator light unit.

## Patentansprüche

1. Beleuchtungssystemkomponente, die eine Polymerzusammensetzung umfasst, umfassend:
(a) ein (Meth)acrylpolymer; und
(b) 5,0-90,0 Gew.-% eines unter Verwendung von Styrol und Maleinsäureanhydrid hergestellten Copolymers, wobei in Bezug auf das Gesamtgewicht von (a) und (b), das Gesamtgewicht von (a) und (b) 100 Gew.-% beträgt, wobei die Polymerzusammensetzung durch Schmelzmischen einer Mischung, umfassend (a) und (b) in einem Schmelzextruder hergestellt wird, wobei der Schmelzextruder umfasst:
(i) einen Einlass zum Zuführen der Mischung;
(ii) einen Zylinder, der eine oder mehrere Extruderschnecke(n) umfasst, die jeweils eine Spitze umfassen;
(iii) eine oder mehrere Öffnung(en) zum Entfernen der erhaltenen Polymerzusammensetzung aus dem Extruder; und
(iv) ein Raumvolumen in der Fläche zwischen der/den Spitze(n) der Extruderschnecke(n) und der/den Öffnung(en) zum Entfernen der erhaltenen Polymerzusammensetzung
wobei während des Schmelzmischens die Temperatur der Polymerzusammensetzung in dem Raumvolumen (iv) ≥ 235 °C und ≤ 255 °C beträgt;
wobei es sich bei der Komponente um einen oder mehrere Lichtleiter, eine Linse oder eine Abdeckung handelt.

2. Beleuchtungssystemkomponente nach Anspruch 1, umfassend eine Polymerzusammensetzung, umfassend:
(a) 60,0-80,0 Gew.-% eines (Meth)acrylpolymers; und
(b) 20,0-40,0 Gew.-% eines unter Verwendung von Styrol und Maleinsäureanhydrid hergestellten Copolymers wobei bezogen auf das Gesamtgewicht von (a) und (b), das Gesamtgewicht von (a) und (b) 100 Gew.-% beträgt.

3. Beleuchtungssystemkomponente nach einem der Ansprüche 1-2, wobei das (Meth)acrylpolymer (a) aus Polymethylmethacrylat (PMMA), Polybutylmethacrylat (PBMA), Poly(methylmethacrylat-ethylacrylat (PMMA-co-EA) oder Polyethylacrylat (PEA) ausgewählt ist.

4. Beleuchtungssystemkomponente nach einem der Ansprüche 1-3, wobei das unter Verwendung von Styrol und Maleinsäureanhydrid hergestellte Copolymer ≥ 10 Gew.-% und ≤ 50 Gew.-% von Maleinsäureanhydrid abgeleitete Polymereinheiten umfasst, bezogen auf das Gesamtgewicht des Copolymers, das unter Verwendung von Styrol und Maleinsäureanhydrid hergestellt wurde.

5. Beleuchtungssystemkomponente nach einem der Ansprüche 1-4, wobei das unter Verwendung von Styrol und Maleinsäureanhydrid hergestellte Copolymer ≥ 20 Gew.-% und ≤ 35 Gew.-% von Maleinsäureanhydrid abgeleitete Polymereinheiten umfasst, bezogen auf das Gesamtgewicht des unter Verwendung von Styrol und Maleinsäureanhydrid hergestellten Copolymers, und wobei das (Meth)acrylpolymer (a) Polymethylmethacrylat (PMMA) ist.

6. Beleuchtungssystemkomponente nach einem der Ansprüche 1-5, wobei die Linse eine Linse des Fresnel-Typs ist.

7. Beleuchtungssystemkomponente nach einem der Ansprüche 1-5, wobei die Beleuchtungskomponente ein Lichtleiter ist, der eine innere Struktur, die geeignet ist, Lichtstrahlung aus wenigstens einer Öffnung, durch die die Strahlung in den Lichtleiter eintritt, zu leiten, und eine Oberflächenstruktur umfasst, die die Lichtstrahlung wenigstens teilweise überträgt.

8. Beleuchtungssystemkomponente nach Anspruch 7, wobei die Oberflächenstruktur die Polymerzusammensetzung umfasst.

9. Beleuchtungssystem, umfassend wenigstens eine Beleuchtungssystemkomponente nach Anspruch 1-8.

10. Beleuchtungssystem nach Anspruch 9, das ferner wenigstens eine LED-Lichtquelle umfasst.

11. Beleuchtungssystem nach einem der Ansprüche 9-10, wobei die Komponente ein Lichtleiter ist, der positioniert ist, das von der LED-Lichtquelle erzeugte Licht von der Lichtquelle zu einer oder mehreren Positionen zu leiten, an denen das Licht emittiert werden soll.

12. Beleuchtungssystem nach einem der Ansprüche 9-11, wobei der Lichtleiter entlang seiner Innenoberfläche für das von der LED-Lichtquelle erzeugte Licht durchlässig ist.

13. Kraftfahrzeugbeleuchtungseinheit, umfassend das Beleuchtungssystem nach einem der Ansprüche 9-12.

14. Kraftfahrzeugbeleuchtungseinheit nach Anspruch 13, wobei die Beleuchtungseinheit eine Scheinwerfereinheit, eine Bremslichteinheit, eine Rücklichteinheit, eine Nebellichteinheit oder eine Blinklichteinheit ist.

## Revendications

1. Composant de système d'éclairage comprenant une composition polymère comprenant :
(a) un polymère (méth)acrylique ; et
(b) 5,0 à 90,0 % en poids d'un copolymère préparé en utilisant du styrène et de l'anhydride maléique par rapport au poids total de (a) et (b), le total de (a) et (b) étant de 100 % en poids, dans lequel la composition polymère est préparée par mélange à l'état fondu d'un mélange comprenant (a) et (b) dans une extrudeuse à l'état fondu, dans laquelle l'extrudeuse à l'état fondu comprend :
(i) une entrée pour alimenter le mélange ;
(ii) un cylindre comprenant une ou plusieurs vis d'extrudeuse comprenant chacune une pointe ;
(iii) une ou plusieurs ouvertures pour retirer la composition polymère obtenue de l'extrudeuse ; et
(iv) un volume d'espace dans la zone entre la ou les pointes de la ou des vis de l'extrudeuse et la ou les ouvertures pour retirer la composition polymère obtenue
dans lequel, pendant le mélange à l'état fondu, la température de la composition polymère dans le volume de l'espace (iv) est ≥ 235°C et ≤ 255°C ; dans lequel le composant est un ou plusieurs parmi un guide lumineux, une lentille ou un couvercle.

2. Composant de système d'éclairage selon la revendication 1, comprenant une composition polymère comprenant :
(a) 60,0 à 80,0 % en poids d'un polymère (méth)acrylique ; et
(b) 20,0 à 40,0 % en poids d'un copolymère préparé en utilisant du styrène et de l'anhydride maléique par rapport au poids total de (a) et (b), le total de (a) et (b) étant de 100 % en poids.

3. Composant de système d'éclairage selon l'une quelconque des revendications 1 à 2, dans lequel le polymère (méth)acrylique (a) est choisi parmi le polyméthylméthacrylate (PMMA), le polybutylméthacrylate (PBMA), le polyméthylméthacrylate-éthylacrylate (PMMA-co-EA) ou le polyéthyl acrylate (PEA).

4. Composant de système d'éclairage selon l'une quelconque des revendications 1 à 3, dans lequel le copolymère préparé en utilisant du styrène et de l'anhydride maléique comprend ≥ 10% en poids et ≤ 50% en poids d'unités polymères dérivées d'anhydride maléique, par rapport au poids total du copolymère préparé en utilisant du styrène et de l'anhydride maléique.

5. Composant de système d'éclairage selon l'une quelconque des revendications 1 à 4, dans lequel le copolymère préparé en utilisant du styrène et de l'anhydride maléique comprend ≥ 20% en poids et ≤ 35% en poids d'unités polymères dérivées d'anhydride maléique, par rapport au poids total du copolymère préparé en utilisant du styrène et de l'anhydride maléique, et dans lequel le polymère (méth)acrylique (a) est le polyméthylméthacrylate (PMMA).

6. Composant de système d'éclairage selon l'une quelconque des revendications 1 à 5, dans lequel la lentille est une lentille de type Fresnel.

7. Composant de système d'éclairage selon l'une quelconque des revendications 1 à 5, dans lequel le composant d'éclairage est un guide lumineux comprenant une structure interne adaptée pour guider le rayonnement lumineux depuis au moins une ouverture à travers laquelle le rayonnement pénètre dans le guide lumineux et une structure de surface qui transmet au moins partiellement le rayonnement lumineux.

8. Composant de système d'éclairage selon la revendication 7, dans lequel la structure de surface comprend la composition polymère.

9. Système d'éclairage comprenant au moins un composant de système d'éclairage selon les revendications 1 à 8.

10. Système d'éclairage selon la revendication 9 comprenant en outre au moins une source lumineuse LED.

11. Système d'éclairage selon l'une quelconque des revendications 9 à 10, dans lequel le composant est un guide lumineux positionné pour guider la lumière générée par la source lumineuse LED depuis la source lumineuse vers une ou plusieurs positions où la lumière doit être émise.

12. Système d'éclairage selon l'une quelconque des revendications 9 à 11, dans lequel le guide lumineux est transmissif le long de sa surface interne à la lumière générée par la source lumineuse LED.

13. Unité d'éclairage automobile comprenant le système d'éclairage selon l'une quelconque des revendications 9 à 12.

14. Unité d'éclairage automobile selon la revendication 13, dans laquelle l'unité d'éclairage est une unité de phare, une unité de feu stop, une unité de feu arrière, une unité de feu antibrouillard ou une unité de voyant lumineux.
